# EUROPÄISCHE PATENTSCHRIFT

(11) **EP 1 448 968 B1**
(45) Veröffentlichungstag und Bekanntmachung des Hinweises auf die Patenterteilung: **23.01.2008**
(21) Anmeldenummer: 02791682.4
(22) Anmeldetag: 15.11.2002
(51) Int. Cl.: G01L 19/06

(54) **DRUCKAUFNEHMER**
PRESSURE SENSOR
CAPTEUR DE PRESSION

(30) Priorität: 27.11.2001 DE 10157761
(43) Veröffentlichungstag der Anmeldung: 25.08.2004
(73) Patentinhaber: Endress + Hauser GmbH + Co. KG, 79689 Maulburg (DE)
(72) Erfinder: MARTIN, Rainer, 79588 Efringen-Kirchen (DE)
(74) Vertreter: Andres, Angelika Maria
(86) Internationale Anmeldenummer: PCT/EP2002/012801
(87) Internationale Veröffentlichungsnummer: WO 2003/046499

(56) Entgegenhaltungen:
- EP-A- 0 565 271
- WO-A-89/03521
- US-A- 5 054 756

## Beschreibung

Die vorliegende Erfindung betrifft Druckaufnehmer, insbesondere Druckaufnehmer mit Flüssigkeitsfüllungen.

Ein Druckaufnehmer, beispielsweise ein Differenzdruckaufnehmer, umfaßt einen Grundkörper, an dessen beiden Stirnseiten je eine vorzugsweise kreisförmige Membran unter Ausbildung einer Druckkammer zwischen der Stirnfläche des Grundkörpers und der Membran befestigt ist. Die beiden Druckkammern sind miteinander über einen hydraulischen Pfad gekoppelt, wobei die Druckkammern, der hydraulische Pfad und gegebenenfalls weitere mit diesem kommunizierende Abschnitte mit einer Hydraulikflüssigkeit gefüllt sind. Für den Betrieb des Drucksensors ist es erforderlich, eine möglichst exakt definierte Flüssigkeitsmenge in dem hydraulischen System bestehend aus den beiden Druckkammern, dem hydraulischen Pfad und den gegebenenfalls vorhandenen kommunizierenden Abschnitten einzubringen. Hierzu wird beispielsweise das hydraulische System vollständig mit Hydraulikflüssigkeit gefüllt, und eine Stahlkugel, die einen größeren Durchmesser aufweist als der freie Durchmesser des Einfüllstutzen, wird in die Einfüllstutzen eingedrückt, wo sie unter plastischer Verformung der Wand des Einfüllstutzens stecken bleibt. Hierdurch wird das hydraulische System abgedichtet, wobei es Streuungen hinsichtlich der Kugelposition und der eingeschlossenen Flüssigkeitsmenge gibt. Zudem ist dieser Verschluß für Druckaufnehmer mit keramischen -Grundkörpern wenig geeignet.

Das Dokument US 5054756 offenbart einen bekannten Drucksensor.

In einer anderen Lösung nach dem Stand der Technik weist der Einfüllstutzen des hydraulischen Systems einen äußeren Abschnitt mit einem ersten Radius auf, der größer ist als der Radius einer Verschlußkugel, und einem zweiten Abschnitt, mit einem kleineren Radius als der Radius der Verschlußkugel, so daß am Übergang zwischen dem ersten Abschnitt und dem zweiten Abschnitt eine Anschlagfläche ausgebildet ist, die durch die Kugel abgedichtet werden kann. In dieser Position wird die Kugel mit einer Schraube fixiert, die mit einem Gewinde in Eingriff gelangt, welches in der Wand des ersten Abschnitts des Einfüllstutzens ausgebildet ist.

Diese Lösung ist konstruktiv aufwendig, insofern als ein Gewinde anzubringen ist. Außerdem führt sie zu geringen Variabilitäten des eingeschlossenen Volumens, da die Kugel- oder die Anschlagfläche in Abhängigkeit des Anpressdrucks der Schraube elastisch bzw. plastisch verformt werden kann.

Der Erfindung liegt daher die Aufgabe zugrunde, einen Druckaufnehmer mit einem verbesserten Verschlußsystem bereitzustellen.

Die Aufgabe wird erfindungsgemäß gelöst durch den Druckaufnehmer gemäß Anspruch 1. Weitere Gesichtspunkte der Erfindung ergeben sich aus den abhängigen Ansprüchen, der Beschreibung und den Zeichnungen.

Der erfindungsgemäße Druckaufnehmer umfaßt:
einen Grundkörper;
mindestens eine Trennmembran, die mit dem Grundkörper eine Druckkammer einschließt;
einen hydraulischen Pfad im Innern des Grundkörpers, welcher mit der Druckkammer kommuniziert;
ein Grundkörpersackloch in einer Oberfläche des Grundkörpers, wobei sich von der Stirnseite des Grundkörpersacklochs ein Kanal erstreckt, der mit dem hydraulischen Pfad kommuniziert, wobei der Durchmesser des Kanals kleiner ist als der Durchmesser des Grundkörpersacklochs, so daß zwischen dem Grundkörpersackloch und dem Kanal eine erste Anschlagfläche ausgebildet ist;
ein in das Grundkörpersackloch einsetzbares Dichtelement mit einer zur Anschlagfläche komplementären zweiten Anschlagfläche und einer radial flexiblen Mantelfläche; und
einen Spreizkörper, der mit dem Dichtelement in Eingriff gebracht werden kann, um die Mantelfläche des Dichtelements radial zu weiten.

Das Grundkörpersackloch ist vorzugsweise im wesentlichen zylindrisch.

Die Mantelfläche des Dichtelements weist vorzugsweise einen äußeren Durchmesser auf, der geringer ist als der Innendurchmesser des Grundkörpersacklochs, wobei das Dichtelement weiter bevorzugt an seiner der Dichtungsfläche abgewandten Rückseite ein Sackloch aufweist, in welches der Spreizkörper eingesetzt werden kann. Der Außendurchmesser des Spreizkörpers ist größer ist als der Innendurchmesser des Sacklochs, so daß die Mantelfläche des Dichtelementes durch das Einführen des Spreizkörpers gegen die Mantelfläche des Grundkörpersacklochs gepreßt wird.

Die Befüllung des Druckaufnehmers mit Hydraulikflüssigkeit erfolgt vorzugsweise durch den Kanal, bis sich der Flüssigkeitspegel über die erste Anschlagfläche hinaus in das Grundkörpersackloch erstreckt. Anschließend wird das Dichtelement in das Grundkörpersackloch eingesetzt, wobei das Dichtelement die überschüssige Flüssigkeit leicht verdrängen kann, da aufgrund der gewählten Radien zwischen der Mantelfläche des Dichtelements und der Sacklochwand ein Spalt verbleibt. Nachdem die zweite Anschlagfläche auf der ersten Anschlagfläche aufgesetzt hat, ist bei gegebener Temperatur eine exakt vorbestimmte Flüssigkeitsmenge in einem ebenso exakt vorgegebenen Volumen eingeschlossen. Wenn nun der Spreizkörper in das Sackloch des Dichtelements eingesetzt wird, kommt es nicht mehr zu einer axialen Verschiebung des Dichtelements, sondern nur noch zur radialen Spreizung eines Teils seiner Mantelfläche. Hierdurch wird das Dichtelement sicher im Grundkörpersackloch fixiert, ohne das eingeschlossene Volumen zu verändern.

Zur Verbesserung der Dichtwirkung ist die Mantelfläche des Dichtelementes vorzugsweise elastisch ausgebildet, wozu einerseits eine elastische Schicht auf einen steiferen Träger aufgebracht sein kann, oder wozu andererseits das gesamte Dichtelement aus einem geeigneten elastischen Material ausgebildet ist. Die konkrete Ausgestaltung des Dichtelements ist beliebig und hängt im wesentlichen von den zu erwartenden Druckbelastungen ab. In der einfachsten Ausgestaltung wird das Dichtelement im wesentlichen durch Reibschluß in dem Grundkörpersackloch gehalten. Wenn größere Druckbelastungen zu erwarten sind, können aber-auch zustätzliche formschlüssige Sicherungsmittel vorgesehen sein.

In der einfachsten Ausgestaltung weist das Grundkörpersackloch eine rein zylinderische Form mit einer vorzugsweise im wesentlichen ebenen ersten Anschlagfläche zwischen dem Grundkörpersackloch und dem Kanal auf, jedoch sind auch hier ohne weiteres Anpassungen an die konkrete Verwendung möglich. Beispielsweise kann die erste Anschlagfläche als Kegelstumpfmantelfläche ausgebildet sein, wobei die zweite Anschlagfläche hierzu komplementär ausgebildet ist. Eine Kegelstumpf oder Kegelform der zweiten Anschlagfläche erleichtert das Entweichen von gasförmigen Einschlüssen beim Einsetzen des Dichtelements in das Grundkörpersackloch.

Hierbei ist jedoch der Neigungswinkel der Kegelmantelfläche so zu wählen, daß die axiale Kraft beim einsetzen des Spreizelements nicht dazu führen kann, daß das Dichtelement in axialer Richtung verschoben wird.

Zur formschlüssigen Sicherung des Dichtelements können in der Wand des Grundkörpersacklochs Aussparungen vorgesehen sein, die vorzugsweise ringförmig ausgebildet sind. Diese Aussparungen sollten vorzugsweise axiale Anschlagflächen bilden, mit denen geeignete Rastmittel des Dichtelements beim Einsetzen des Spreizelements in Eingriff gebracht werden.

Die Erfindung wird nun anhand eines Ausführungsbeispiels und der zugehörigen Zeichnung beschrieben.

Es zeigt:

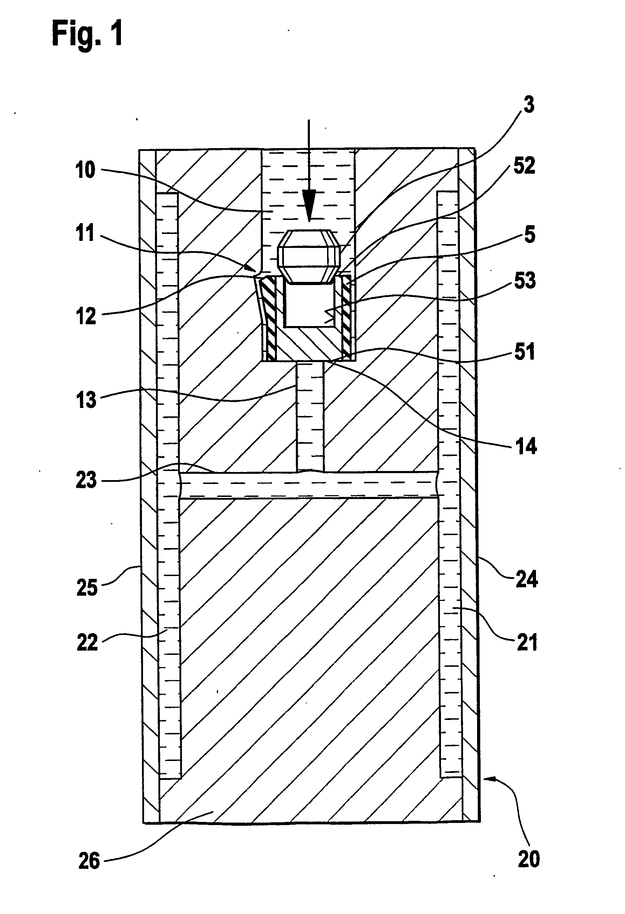

Fig. 1: Einen Querschnitt durch einen erfindungsgemäßen Differenzdruckaufnehmer; und
Fig. 2: eine modifizierte Ausführungsform eines Verschlußsystems für einen erfindungsgemäßen Druckaufnehmer.

Der Differenzdruckaufnehmer 20 umfaßt einen Grundkörper 26 der vorzugsweise zylindrisch ausgebildet ist. Auf den beiden Stirnflächen des Grundkörpers 26 ist jeweils eine Membran 24, 25 entlang ihres Randes befestigt, wobei zwischen den beiden Stirnflächen und der jeweiligen Membran 24, 25 jeweils eine Druckkammer 22, 21 ausgebildet ist. Die beiden Druckkammern sind bei dieser Ausführungsform miteinander durch einen Druckkanal 23 verbunden. Die Druckkammern 21, 22 und der Druckkanal 23 werden durch einen Kanal 13 mit einer Übertragungsflüssigkeit befüllt, wobei das hydraulische System, bestehtend, aus den beiden Druckkammern 21, 22, dem Druckkanal 23 und dem Kanal 13 anschließend druckdicht verschlossen werden.

Beim bestimmungsgemäßen Einsatz des Differenzdruckaufnehmers werden die beiden Membranen 24, 25 jeweils auf ihrer dem Grundkörper abgewandten Oberfläche mit einem ersten bzw. mit einem zweiten Meßdruck beaufschlagt, wobei die Auslenkung der Membranen 24, 25 aus der Ruhelage eine Funktion der Differenz zwischen dem ersten und zweiten Meßdruck ist.

Die Druckdifferenz kann in geeigneter Weise beispielsweise kapazitiv oder piezoresistiv erfaßt werden, worauf hier nicht weiter einzugehen ist, da diese Prinzipien dem Fachmann geläufig sind.

Insbesondere für einen Differenzdruckaufnehmer ist es von Bedeutung, daß die Füllmenge des hydraulischen Systems möglichst exakt einem vorgegebenem Wert entspricht, damit sich die Membranen 24, 25 in der Gleichgewichtslage und bei einer Referenztemperatur am vorgegebenen Arbeitspunkt befinden.

Der Einschluß einer vorbestimmten Füllmenge von Hydraulikflüssigkeit im hydraulischen System wird durch beschriebene Verschlußsystem ermöglicht. Der Grundkörper weist in seiner Mantelfläche eine Bohrung bzw. ein Grundkörpersackloch 10 auf, in dessen Stirnfläche der Kanal 13 mündet, wobei der Kanal 13 einen kleineren Durchmesser als das Sackloch 10 aufweist.

In das Grundkörpersackloch 10 wird nach dem Befüllen des hydraulischen Systems mit Hydraulikflüssigkeit ein becherförmiges Dichtelement eingesetzt, dessen Boden komplementär zu einer ersten Anschlagfläche 14 geformt ist, welche zwischen der Öffnung des Kanals 13 und der Wand des Gehäusesacklochs gebildet ist. Die Stirnfläche des Dichtelements dient als zweite Anschlagfläche 51, die auf der ersten Anschlagfläche 14 aufsitzt. Bei diesem Ausführungsbeispiel weist das Dichtelement auf seiner Mantelfläche eine elastische Schicht auf, vorzugsweise ein Elastomer. Das Dichtelement 5 ist so bemessen, daß zwischen der Mantelfläche des Dichtelements 5 und der Wand des Grundkörpersacklochs 10 zunächst ein Ringspalt verbleibt, so daß die hydraulische Flüssigkeit an dem Dichtelement vorbei strömen kann, wenn das Dichtelement 5 in das Grundkörpersackloch 10 eingesetzt wird. Nach dem Aufsetzten der zweiten Anschlagfläche 51 auf der ersten Anschlagfläche 14 ist der Flüssigkeitsaustausch zwischen dem hydraulischen System und der Umgebung unterbrochen. Das Dichtelement 5 weist in seiner dem Kanal abgewandten rückseitigen Stirnfläche 52 ein Sackloch 53 auf, in welches ein Spreizkörper 3 eingepreßt wird, dessen Mantelfläche einen größeren Außenradius aufweist als der Radius des Sacklochs 53. Zumindest in einem Endabschnitt des Spreizkörpers 3 ist ein Kegelstumpfabschnitt vorgesehen, der beim Einpressen des Spreizkörpers 3 in das Sackloch 53 des Dichtelements 5 dessen Mantelfläche in seinem rückwärtigen Abschnitt radial nach außen drückt, so daß es zu einer Reibschlußverbindung zwischen der Wand des Grundkörpersacklochs und der Mantelfläche des Dichtelements 5 kommt.

Im zentralen Abschnitt des Spreizkörpers 3 ist ein Abschnitt mit einer zylindrischen Mantelfläche vorgesehen. In diesem Abschnitt weist der Spreizkörper 3 den größten Radius auf. Wenn der Spreizkörper vollständig in das Sackloch 53 eingepreßt ist, wirken auf ihn daher im wesentlichen nur radiale Kräfte, so daß er auch nicht mehr aus dem Sackloch herausgedrückt werden kann. Anstelle der eben beschriebenen Ausgestaltung kann der Spreizkörper kann aber auch kugelförmig ausgebildet sein, womit der gleiche Effekt erzielt wird. Die Kugelform ist insofern vorteilhaft, als Kugeln mit beliebigen Durchmessern günstig kommerziell erhältlich sind.

Vorzugsweise ist der Spreizkörper 3 symmetrisch um eine Spiegelebene, die Senkrecht zu seiner Symmetrieachse verläuft, ausgebildet, d.h. auch an der Rückseite des Spreizkörpers 3 ist ein Kegelstumpf vorgesehen. Dies bewirkt, daß verbleibende axiale Kräfte, die auf den vorderen Kegelstumpf wirken könnten, durch entsprechende axiale Gegenkräfte kompensiert werden können, die auf den rückseitigen Kegelstumpf des Spreizkörpers wirken.

Soweit erforderlich, kann in der Wand des Grundkörpersacklochs 10 Aussparungen 11 vorgesehen sein, mit welcher Vorsprünge an der Mantelfläche des Dichtelements 5 in Eingriff gelangen, wenn der Spreizkörper 3 in das Sackloch 53 gepreßt wird. Auf diese Weise wird das Dichtelement nicht nur durch Reibschluß sondern auch formschlüssig gehalten.

Der Kern des Dichtelements 5 und der Grundkörper 26 können aus verschiedenen Materialien gefertigt sein, beispielsweise kann das Dichtelement einen Stahlkern aufweisen, während der Grundkörper 26 eine Keramik, z.B. Korund, umfassen kann. In diesem Fall weist eine besonders bevorzugte Ausführungsform des Dichtelements 5 eine Mantelfläche mit einer elastischen Dichtung auf, die geeignet ist, mechanische Spannungen aufgrund unterschiedlichen termischen Ausdehnungen auszugleichen.

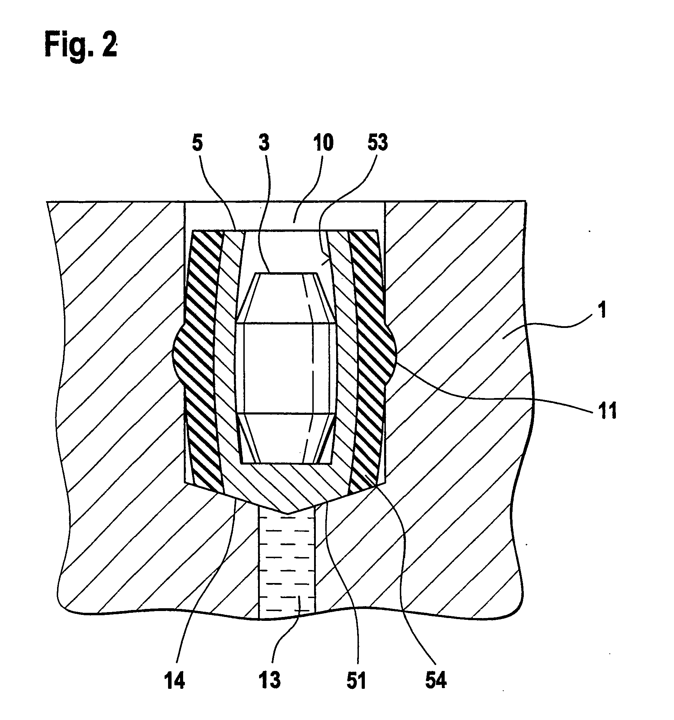

Fig. 2 zeigt eine leicht modifizierte Ausführungsform der Verschlußanordnung, wobei die Zylinderwand des Grundkörpersacklochs 10 eine Ringnut 11 aufweist. Außerdem ist die erste Stirnfläche kegelstumpfförmig ausgebildet, wodurch das vollständige Entweichen von Luftblasen in der Hydraulikflüssigkeit erleichtert wird, denn die zweite Anschlagfläche 51 an der Stirnseite des Dichtelements 5 ist ebenfalls kegelförmig ausgebildet, so daß Luftblasen beim Einsetzen des Dichtungselements aufgrund des Auftriebs entweichen können. Zur Zentrierung des Dichtelements können in seinem vorderen Abschnitt radiale Nasen vorgesehen sein. Das Dichtelement 5 weist einen becherförmigen Kern aus einem elastischen Metall auf, der mit einem Mantel 54 zu einem elastischen Dichtungsmaterial, vorzugsweise Gummi, beschichtet ist. Die Materialstärke des Mantels 54 ist so bemessen, daß der Mantel die Ringnut 11 in der Wand des Grundkörpersacklochs nach dem Einpressen des Spreizelements 3 in das Sackloch 53 des Dichtelements 3 ausfüllt.

Der Spreizkörper kann bei allen Ausführungsformen eine Gewindebohrung entlang seiner Symmetrieachse aufweisen, die es ermöglicht, den Spreizkörper mittels eines eingeschraubbaren Bolzens aus dem Dichtelement zu entfernen, beispielsweise zur Wartung des Druckaufnehmers. Anstelle einer Gewindebohrung kann auch eine Bohrung mit mindestens einer Anschlagfläche zur Aufnahme einer axialen Kraft vorgesehen sein, beispielsweise in Form eines Bajonettverschlusses.

## Patentansprüche

1. Der Druckaufnehmer (20), umfassend
einen Grundkörper (26);
mindestens eine Trennmembran (24,25), die mit dem Grundkörper (26) eine Druckkammer einschließt;
einen hydraulischen Pfad (23) im Innern des Grundkörpers(26), welcher mit der Druckkammer (21,22) kommuniziert;
ein Grundkörpersackloch (10) in einer Oberfläche des Grundkörpers (26), wobei sich von der Stirnseite des Grundkörpersacklochs (10) ein Kanal (13)erstreckt, der mit dem hydraulischen Pfad (23) kommuniziert, wobei der Durchmesser des Kanals (13) kleiner ist als der Durchmesser des Grundkörpersacklochs (10), so daß zwischen dem Grundkörpersackloch (10) und dem Kanal (13) eine erste Anschlagfläche (14) ausgebildet ist;
ein in das Grundkörpersackloch (10) einsetzbares Dichtelement (5) mit einer zweiten Anschlagfläche (51) zum Abstützen des Dichtelements (5) auf der ersten Anschlagfläche (14) und einer radial flexiblen Mantelfläche; und
einen Spreizkörper (3) , der mit dem Dichtelement (5) in Eingriff gebracht werden kann, um die Mantelfläche des Dichtelements (5) radial zu weiten.

2. Druckaufnehmer nach Anspruch 1, wobei die Mantelfläche des Dichtelements (5) radial elastisch ist und der Außendurchmesser der Mantelfläche in der Gleichgewichslage geringer ist als der Innendurchmesser des Grundkörpersacklochs (10).

3. Druckaufnehmer nach Anspruch 1 oder 2 wobei das Dichtelement (5) an seiner der zweiten Anschagfläche (51) abgewandten Rückseite (52) ein Sackloch (53) aufweist, in welches der Spreizkörper (3) einsetzbar ist.

4. Druckaufnehmer nach Anspruch 3, wobei der Außendurchmesser des Spreizkörpers (3) größer ist als der Innendurchmesser des Sacklochs (53), so daß die Mantelfläche des Dichtelementes (5) durch das Einführen des Spreizkörpers (3) gegen das Grundkörpersackloch (10) gepreßt wird.

5. Druckaufnehmer nach einem der vorhergehenden Ansprüche, wobei der Spreizkörper (3) zumindest einen sich verjüngenden Endabschnitt aufweist.

6. Druckaufnehmer nach einem der vorhergehenden Ansprüche, wobei das Grundkörpersackloch (10) an seiner Mantelfläche mindestens eine Aussparung (11) und das Dichtelement mindestens ein Rastmittel (12) aufweist, das mittels des Spreizkörpers (3) mit der mindestens einen Aussparung (11) in Eingriff bringbar ist.

7. Druckaufnehmer nach einem der vorhergehenden Ansprüche , wobei der Grundkörper ein keramisches Material aufweist.

8. Druckaufnehmer nach einem der vorhergehenden Ansprüche, wobei die zweite Anschlagfläche (51) komplementär zur ersten Anschlagfläche (14) gestaltet ist.

9. Druckaufnehmer nach einem der vorhergehenden Ansprüche, wobei der Druckaufnehmer ein Absolutdruckaufnehmer, ein Relativdruckaufnehmer, oder ein Differenzdruckaufnehmer ist.

## Claims

1. The pressure sensor (20), comprising:
a base body (26);
at least one separating membrane (24,25), which, with the base body (26), encloses a pressure chamber;
a hydraulic path (23) inside the base body (26), which communicates with the pressure chamber (21,22);
a base body blind hole (10) in a surface of the base body (26), a channel (13) extending from the end side of the base body blind hole (10) and communicating with the hydraulic path (23), the diameter of the channel (13) being smaller than the diameter of the base body blind hole (10), so that a first abutment surface (14) is formed between the base body blind hole (10) and the channel (13);
a sealing element (5) insertable into the base body blind hole (10), the sealing element having a second abutment surface (51) for supporting the sealing element (5) on the first abutment surface (14), and having a radially flexible lateral surface; and
an expansion element (3), which can be brought into engagement with the sealing element (5), in order to radially widen the lateral surface of the sealing element (5) .

2. Pressure sensor according to Claim 1, wherein the lateral surface of the sealing element (5) is radially elastic and the outer diameter of the lateral surface in the equilibrium position is less than the inner diameter of the base body blind hole (10).

3. Pressure sensor according to Claim 1 or 2, wherein the sealing element (5) has on its rear side (52) facing away from the second abutment surface (51) a blind hole (53), into which the expansion element (3) can be inserted.

4. Pressure sensor according to Claim 3, wherein the outer diameter of the expansion element (3) is greater than the inner diameter of the blind hole (53), so that the lateral surface of the sealing element (5) is pressed against the base body blind hole (10) by insertion of the expansion element (3).

5. Pressure sensor according to one of the preceding claims, wherein the expansion element (3) has at least one tapering end section.

6. Pressure sensor according to one of the preceding claims, wherein the base body blind hole (10) has at least one recess (11) on its lateral surface and the sealing element has at least one catch means (12), which can be brought into engagement with the at least one recess (11) by means of the expansion element (3).

7. Pressure sensor according to one of the preceding claims, wherein the base body comprises a ceramic material.

8. Pressure sensor according to one of the preceding claims, wherein the second abutment surface (51) has a shape which is complementary to that of the first abutment surface (14).

9. Pressure sensor according to one of the preceding claims, wherein the pressure sensor is an absolute pressure sensor, a relative pressure sensor or a differential pressure sensor.

## Revendications

1. Capteur de pression (20) comprenant
un corps de base (26) ;
au minimum une membrane de séparation (24, 25), qui renferme une chambre de pression (21, 22) avec le corps de base (26) ;
un parcours hydraulique (23) à l'intérieur du corps de base (26), lequel communique avec la chambre de pression (21, 22) ;
un trou borgne (10) réalisé dans une surface du corps de base (26), un canal (13) s'étendant à partir de la face frontale du trou borgne (10) du corps de base, lequel canal communique avec le parcours hydraulique (23), le diamètre du canal (13) étant inférieur au diamètre du trou borgne (10) du corps de base, si bien que se forme une première surface de butée (14) entre le trou borgne (10) du corps de base et le canal (13) ;
un élément d'étanchéité (5) pouvant être introduit dans le trou borgne (10) du corps de base, avec une deuxième surface de butée (51) servant d'appui à l'élément d'étanchéité (5) sur la première surface de butée (14) et une surface latérale radiale flexible, et
un corps extensible (3), qui peut être mis en prise avec l'élément d'étanchéité (5), afin d'élargir radialement la surface latérale de l'élément d'étanchéité (5).

2. Capteur de pression selon la revendication 1, la surface latérale de l'élément d'étanchéité (5) étant radiale et élastique, et le diamètre extérieur de la surface latérale en position d'équilibre étant inférieur au diamètre intérieur du trou borgne (10) du corps de base.

3. Capteur de pression selon la revendication 1 ou 2, l'élément d'étanchéité (5) présentant sur sa face arrière (52), située à l'opposé de la deuxième surface de butée (51), un trou borgne (53), dans lequel le corps extensible (3) peut être introduit.

4. Capteur de pression selon la revendication 3, le diamètre extérieur du corps extensible (3) étant supérieur au diamètre intérieur du trou borgne (53), si bien que la surface latérale de l'élément d'étanchéité (5) est pressée contre le trou borgne (10) du corps de base par l'introduction du corps extensible (3).

5. Capteur de pression selon l'une des revendications précédentes, le corps extensible (3) présentant au moins une section finale, qui diminue.

6. Capteur de pression selon l'une des revendications précédentes, le trou borgne (10) du corps de base présentant sur sa surface latérale au moins un évidement (11) et l'élément d'étanchéité au moins un dispositif d'enclenchement (12), qui peut être amené en prise au moyen du corps extensible (3) avec au moins un évidement (11).

7. Capteur de pression selon l'une des revendications précédentes, le corps de base présentant un matériau céramique.

8. Capteur de pression selon l'une des revendications précédentes, la deuxième surface de butée (51) étant conçue de façon complémentaire à la première surface de butée (14).

9. Capteur de pression selon l'une des revendications précédentes, le capteur de pression étant un capteur de pression absolue, un capteur de pression relative ou un capteur de pression différentielle.
